(19) **Europäisches Patentamt**
**European Patent Office**
**Office européen des brevets**

(11) **EP 1 966 810 B1**

(12) **EUROPEAN PATENT SPECIFICATION**

(45) Date of publication and mention
of the grant of the patent:
**25.01.2012 Bulletin 2012/04**

(51) Int Cl.:
*H01G 4/18* (2006.01)

(21) Application number: **06849009.3**

(22) Date of filing: **18.12.2006**

(86) International application number:
**PCT/US2006/048258**

(87) International publication number:
**WO 2007/078916 (12.07.2007 Gazette 2007/28)**

(54) **HIGH ELECTRIC ENERGY DENSITY POLYMER CAPACITORS WITH FAST DISCHARGE SPEED AND HIGH EFFICIENCY BASED ON UNIQUE POLY(VINYLIDENE FLUORIDE) COPOLYMERS AND TERPOLYMERS AS DIELECTRIC MATERIALS**

POLYMERKONDENSATOREN MIT HOHER STROMDICHTE, SCHNELLER ENTLADUNGSGESCHWINDIGKEIT UND HOHER EFFIZIENZ AUF BASIS VON EINZIGARTIGEN POLY(VINYLIDEN-FLUORID)-COPOLYMEREN UND TERPOLYMEREN ALS DIELEKTRISCHEN MATERALIEN

CONDENSATEURS POLYMERES A HAUTE DENSITE D'ENERGIE ELECTRIQUE, A VITESSE DE DECHARGE ELEVEE ET HAUTE EFFICACITE A BASE DE COPOLYMERES ET DE TERPOLYMERES DE POLY(FLUORURE DE VINYLIDENE) UNIQUES UTILISES COMME MATERIAUX DIELECTRIQUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2005 US 754497 P**

(43) Date of publication of application:
**10.09.2008 Bulletin 2008/37**

(73) Proprietor: **THE PENN STATE RESEARCH FOUNDATION**
**University Park, PA 16802 (US)**

(72) Inventors:
• **ZHANG, Qiming**
**State College, PA 16803 (US)**
• **CHU, Baojin**
**State College, PA 16803 (US)**

• **ZHOU, Xin**
**State College, PA 16801 (US)**
• **LU, Yingying**
**State College, PA 16803 (US)**
• **WANG, Qing**
**Collegeville, PA 19426 (US)**
• **NEESE, Bret**
**State College, PA 16803 (US)**

(74) Representative: **von Kreisler Selting Werner**
**Deichmannhaus am Dom**
**Bahnhofsvorplatz 1**
**50667 Köln (DE)**

(56) References cited:
**EP-A- 0 298 811      EP-A1- 0 129 244**
**US-A- 4 434 209      US-A1- 2002 146 567**
**US-B1- 6 423 412**

**Description**

**BACKGROUND OF THE INVENTION**

**1. Field of the Invention**

The present invention relates generally to a high electric energy density polymer capacitor with fast discharge speed and high efficiency. More particularly, the present invention relates to a high energy density polymer capacitor based on a unique group of PVDF based copolymers and terpolymers.

**2. Description of Related Art**

The commercial and consumer requirements for compact and more reliable electric power and electronic systems such as hybrid electric vehicles and defibrillators have grown substantially over the past decade. As a result, development of high electric energy and power density capacitor technology has grown to become a major enabling technology.

For a typical parallel plate capacitor, the capacitance C is given by:

$$C = K\,\varepsilon_0\,A/t \qquad (1)$$

wherein K is the dielectric constant (relative permittivity), A is the area and t is the thickness of the capacitor, and $\varepsilon_0$ is a constant (vacuum permittivity, and = 8.85x10$^{-12}$ F/m).

For linear dielectric materials, electric energy density varies according to:

$$U_e = \tfrac{1}{2}K\varepsilon_0 E^2 \qquad (2)$$

wherein E is the electric field in the capacitor.

Energy densities of nonlinear dielectrics must be derived from the relationship

$$U_e = \int E\,dD \qquad (3)$$

where D is the electric displacement:

EP 0 298 811 A1 discloses a multilayer capacitor based on ferro-electric polymers, with a dielectic comprising a terpolymer of vinyliden fluoride/ trifluoroethylene/chlortrifluoroethylene.

Although ceramic-based dielectric materials usually display very high dielectric constant (i.e., >1,000), the relatively low breakdown field (<50 MV/m) and catastrophic failure in the ceramic capacitors results In a low electric energy density (< 1 J/cm$^3$). On the other hand, although conventional polymers show low dielectric constant (<5), the very high breakdown field (>500 MV/m) generates a relatively high energy density. Thus, for instance, biaxially oriented polypropylene (BOPP), even with a dielectric constant of 2.2 (K=2.2), the high breakdown field (- 650 MV/m) produces a maximum electric energy density of more than 4 J/cm$^3$.

In PVDF based polymers, there are different molecular conformations and a reversible change between the polar and non-polar conformations can

result in a large polarization change, with the potential to reach a high energy density (see equation (3)). However, the prior art does not teach how to control this polarization change so that the maximum energy density (>20 J/cm$^3$) allowed in this class of polymer can be achieved.

Accordingly, the present invention provides a new class of a modified PVDF polymer, including PVDF based copolymers and terpolymers in which the electric energy density at least 10 J/cm$^3$ can be obtained and there is a possibility of reaching energy density of 30 J/cm$^3$. In addition, these polymer capacitors can be charged and discharged with fast speed (in less than 0.001 seconds) and with high efficiency (more than 85% of the stored electric energy can be discharged to a load). These high energy density polymer capacitors with fast discharge speed and high efficiency will impart on a broad range of power electronics and electric power systems such as these used in the defibrillators, in the hybrid electric vehicles, and in the electric weapons.

**SUMMARY OF THE INVENTION**

The present invention provides an improved charge or energy storage device which is defined by the features of claim 1. Embodiments thereof are defined by the dependent claims. The device has an organic film as the charge or energy storage layer. The improvement comprising:

a charge or energy storage layer comprising:

(ii) a polymer blend of PVDF homopolymer with a copolymer selected from the group consisting of: P(VDF-CTFE); P(VDF-CFE); P(VDF-HFP); and P(VDF-CDFE); or
(iii) a polymer blend of a PVDF homopolymer with a terpolymer selected from the group consisting of: P(VDF-TrFE-CTFE); P(VDF-TrFE-CFE); P(VDF-TrFE-HFP): P(VDF-TrFE-CDFE); P(VDF-TFE-CTFE); P(VDF-TFE-CFE); P(VDF-TFE-HFP); and P(VDF-TFE-CDFE); or
(iv) a polymer blend of copolymer selected from the group consisting of: P(VDF-CTFE); P(VDF-CFE); P(VDF-HFP); and P(VDF-CDFE); with a terpolymer selected from the group consisting of: P(VDF-TrFE-CTFE); P(VDF-TrFE-CFE); P(VDF-TrFE-HFP); P(VDF-TrFE-CDFE); P(VDF-TFE-CTFE); P(VDF-TFE-CFE); P(VDF-TFE-HFP); and P(VDF-TFE-CDFE).

The present inventors have discovered that a high electric energy density with fast discharge speed (less than 0.001 seconds) and high efficiency can be achieved in a unique group of polymer capacitor materials, which combine the high breakdown field with improved (matched) dielectric constant, phase stability of the non-polar phase, and large polarization change between non-polar and polar phases.

These copolymers and terpolymers capacitors can be used with a broad range of power electronics including hybrid electric vehicles and defibrillators for storing, controlling, and manipulating electric charge, electric energy, and electric power with high efficiency.

Further objects, features and advantages of the present invention will be understood by reference to the drawings and detailed description that follow.

**BRIEF DESCRIPTION OF THE DRAWINGS**

Fig. 1 is a graph depicting discharge energy density of a P(VDF-TrFE-CFE) 62/29/9 mol% terpolymer as a function of the applied electric field.

Fig. 2 is a graph schematically illustrating the relationship between the saturation electric field and electric energy density. For the cases shown in Fig. 2, even though the polymer in "1" has a higher dielectric constant than that in "2", the lower saturation electric field in "1" leads to a lower energy density.

Figs. 3(a)-(c) are graphs having charging and discharging curves measured using a Sawyer-Tower circuit at 10 Hz for (a) unstretched PVDF, (b) uniaxially stretched PVDF, and (c) uniaxially stretched P(VDF-CTFE) at 15 wt% CTFE.

Fig. 4 is a graph depicting discharged energy density of unstrectched PVDF, uniaxially stretched PVDF homopolymer as a function of electric field.

Fig. 5 is a graph depicting discharged energy density of unstretched P(VDF-CTFE), uniaxially stretched P(VDF-CTFE) at 15wt% CTFE as a function of electric field.

Fig. 6(a) is a graph depicting charging and discharging data for a uniaxially stretched P(VDF-HFP) 90/10 wt%.

Fig. 6(b) is a graph depicting the corresponding discharged energy density at different applied field levels.

Fig. 7 is a graph depicting discharging data of P(VDF-CTFE) 85/15 wet% under a field of 347 MV/m to a 100 kohm resistor load, wherein the capacitance of the copolymer sample is at 0.5 nF.

**DETAILED DESCRIPTION OF THE REFERRED EMBODIMENTS**

The present invention as defined by the features of claim 1 provides a device for storing, and/or controlling, and/or manipulating of charge and/or electric energy having a polymer film as the dielectric layer, such as, a capacitor.

The polymer thin film can be polymer blends comprising copolymers or terpolymers selected from P(VDF-CTFE), P(VDF-CFE), P(VDF-HFP). P(VDF-CDFE), P(VDF-TrFE-CTFE). P(VDF-TrFE-CFE). P(VDF-TrFE-HFP). P(VDF-TrFE-COFE), P(VDF-TFE-CTFE). P(VDF-TFE-CFE), P(VDF-TFE-HFP), P(VDF-TFE-CDFE) is provided, wherein:

CTFE: chlorotrifluoroethylene;
CFE: chlorofluoroethylene;
HFP: hexafluoropropylene;
CDFE: chlorodifluoroethylene;
TrFE: trifluoroethylene; and
TFE: tetrafluoroethylene.

The mol% of CTFE, or CFE, or HFP, or CDFE in the copolymers and terpolymers is in the range between 0 mol% and 10 mol%.

The mol% of TrFE or TFE in the terpolymers is in the range between 0 mol% and 15 mol%.

Provided is a polymer blend of PVDF homopolymer with a copolymer selected from the group consisting of: P(VDF-CTFE); P(VDF-CFE); P(VDF-HFP); and P(VDF-CDFE) or a polymer blend of a PVDF homopolymer with a terpolymer selected from the group consisting of: P(VDF-TrFE-CTFE): P(VDF TrFE-CFE); P(VDF-TrFE-HFP); P(VDF-TrFE-CDFE); P(VDF-TFE-CTFE); P(VDF-TFE-CFE): P(VDF-TFE-HFP); and P(VDF-TFE-CDFE), including, for example, polymer blends with either a PVDF homopolymer or a copolymer and a terpolymer. The copolymer is selected from one of the following:

P(VDF-CTFE);
P(VDF-CFE);
P(VDF-HFP); and
P(VDF-CDFE).

Additionally provided is a polymer blend of copolymer selected from the group consisting of: P(VDF-CTFE); P(VDF-CFE); P(VDF-HFP); and P(VDF-CDFE); with a terpolymer selected from the group consisting of: P(VOF-TrFE-CTFE): P(VDF-TrFE-CFE); P(VDF-TrFE-HFP); P(VDF-TrFE-CDFE); P(VDF-TFE-CTFE); P(VDF-TFE-CFE); P(VDF-TFE-HFP); and P(VDF-TFE-CDFE). The terpolymer is selected from the following:

P(VDF-TrFE-CTFE);
P(VDF-TrFE-CFE);
P(VDF-TrFE-HFP);
P(VDF-TrFE-CDFE);
P(VDF-TFE-CTFE); .
P(VDF-TFE-CFE);
P(VDF-TFE-HFP); and
P(VDF-TFE-CDFE).

The composition for the copolymer in a blend of PVDF homopolymer or a copolymer and a terpolymer is at CTFE or CFE or HFP or CDFE in the range of up to 10 mol% and the terpolymer is at TrFE or TFE mol% in the range from 20 mol% to 40 mol% and at CTFE, or CFE, or HFP, or CDFE in the range of 3 to 10 mol%.

The copolymer, terpolymer, and blends of PVDF homopolymer or a copolymer and a terpolymer films are uniaxially stretched to a drawing ratio from 0X to 8X (zero times to 8 times) of the original length.

The copolymer, terpolymer, and blends of PVDF homopolymer or a copolymer and a terpolymer films are biaxially stretched to a stretching ratio from 0X to 5X of the original length.

The stored electric energy density of these copolymer and terpolymer films at least about 10 J/cm$^3$ under an electric field higher than 450 MV/m, preferably between about 12 to about 30 J/cm$^3$ under an electric field higher than 450 MV/m, and more preferably between about 12 to about 22 J/cm$^3$ under an electric field higher than 450 MV/m.

The discharge time (release of 90% of the stored energy) of a polymer thin film capacitor (~0.1 μF) to a 1 kohm load should be less than 1 ms.

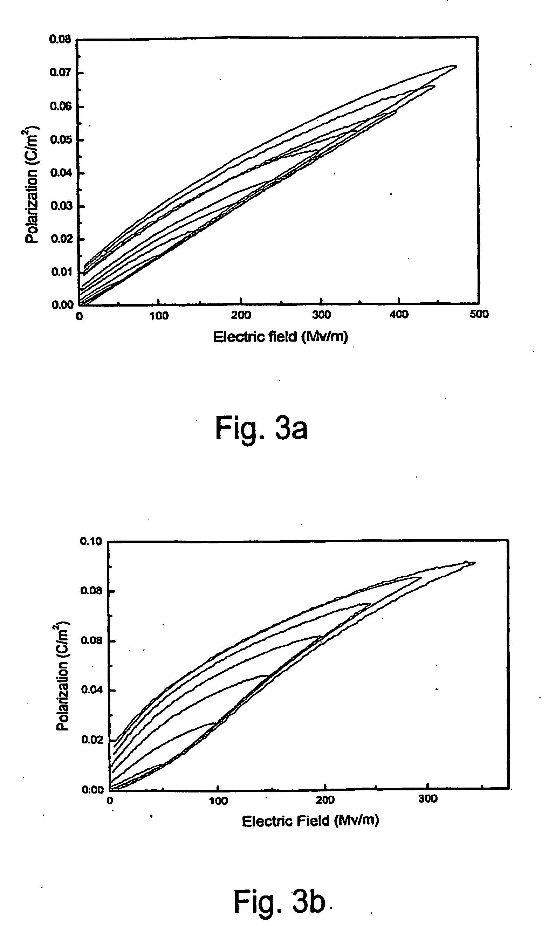

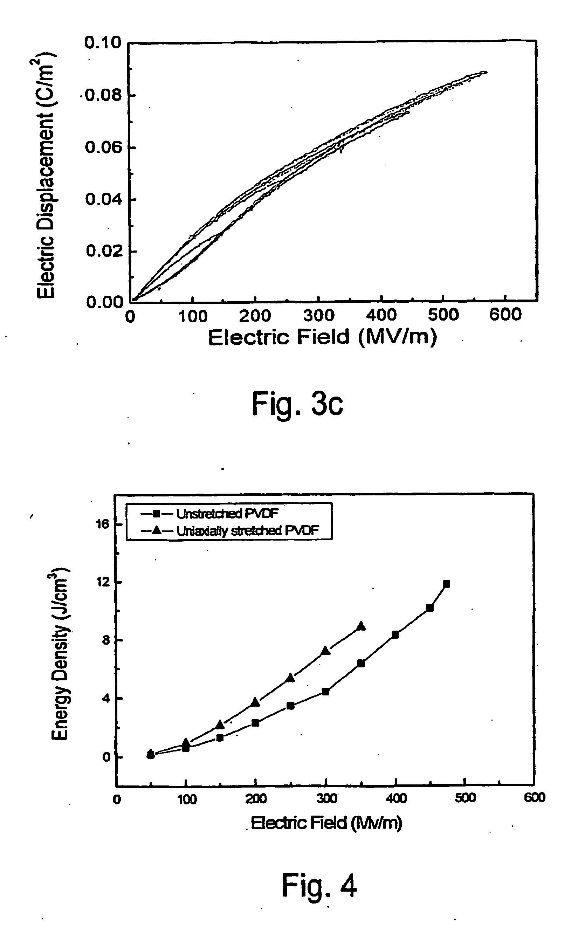

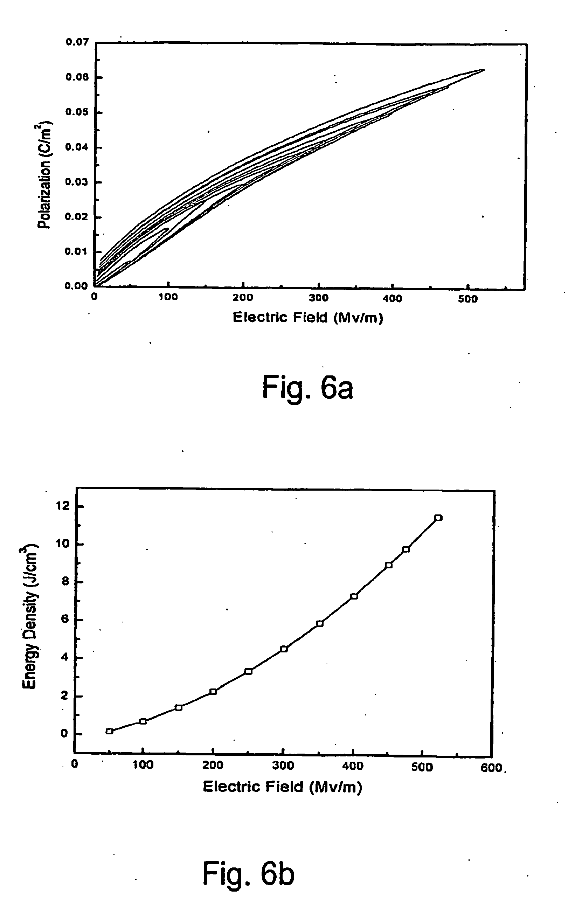

The discharge efficiency, as defined by the ratio of the discharged energy density to the stored energy density (which can be directly derived from Figure 3 and Figure 6 using equation 3), should be better than 85% for 1 ms discharge time.

The polymer possesses a stable non-polar phase after the uniaxial drawing of the film to more than 5x or application of electric field of higher than 400 MV/m at temperatures above 50 °C.

The present inventors have discovered based on molecular structure consideration and dielectric constant/electric polarization/saturation electric field relationship that a high electric energy density with high discharge efficiency and fast discharge time can be achieved with a unique class of polymer capacitor materials, which combine the high breakdown field with improved (marched) dielectric constant and phase stability of the non-polar phase.

For example, in recently developed relaxor ferroelectric polymers, i.e., poly(vinylidene-fluoride/trifluoroethylene) (P(VDF-TrFE)) based terpolymers and high energy electron irradiated P(VDF-TrFE) copolymers, a room temperature dielectric constant of higher than 50 has been achieved. Consequently, under a field of 350 MV/m, an electric energy density of 10 J/cm$^3$ can be ob-

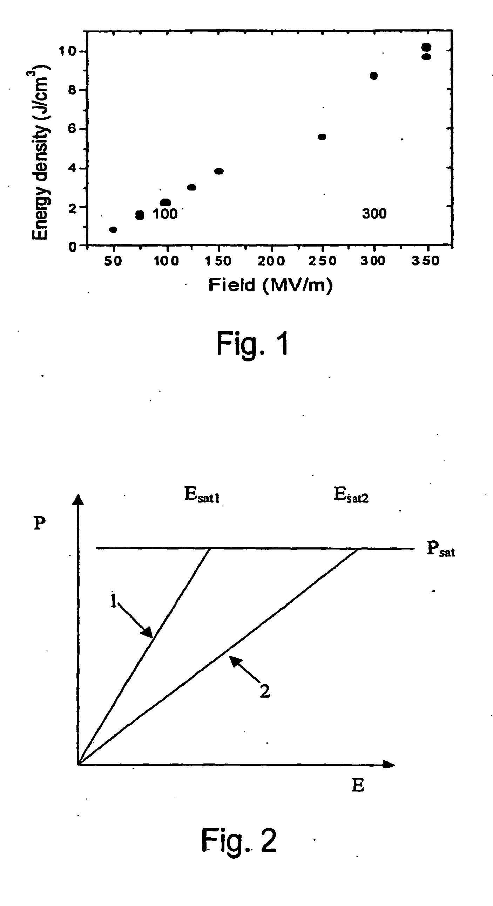

tained (see Figure 1).

On the other hand, due to the nonlinear dielectric behavior, the relaxor ferroelectric polymers show polarization saturation (as indicated by a reduction of the effective dielectric constant with applied field amplitude), which limits the further increase of the electric energy density to far beyond 10 J/cm$^3$ level.

In PVDF based polymer, there are different molecular conformations and a reversible change between the polar and non-polar conformations can result in a large polarization change, with the potential to reach a high energy density as suggested by equation (3). However, the prior art does not teach how to control this polarization change so that the maximum energy density allowed in this class of polymer can be achieved.

Accordingly, the present invention uses blends of PVDF polymer, including PVDF based copolymers and terpolymers in which the energy density at least 10 J/cm$^3$ can be obtained and there is a possibility of reaching energy density of 30 J/cm$^3$.

These high energy density polymer capacitor materials will impact on a broad range of power electronics and electric power systems such as these used in the hybrid electric vehicles and in the defibrillators.

In all the dielectric materials, there exists a polarization saturation, that is, the polarization level can't be increased further even applying higher electric fields (see Figure 2). For PVDF based polymers, the highest polarization can be reached is about 0.1 C/m$^2$ and the breakdown field can be more than 600 MV/m. If the polarization saturation occurs at 500 MV/m, the energy density, following Figure 2, will reach 25 J/cm$^3$. If the polarization saturation occurs at 600 MV/m, the energy density, following Figure 2, will further reach 30 J/cm$^3$.

For such a dielectric materials, the dielectric constant is 20, lower than the relaxor ferroelectric polymer (K>50). This analysis indicates that to achieve higher energy density in PVDF based polymers, a dielectric constant near 20 would be preferred.

In PVDF homopolymers, the room temperature dielectric constant can reach 12 and a breakdown field of higher than 500 MV/m has been shown, indicating a potential to achieve an electric energy density - 15 J/cm$^3$. If PVDF polymer can maintain its nonpolar phase (the α-phase) after applying a high electric field, the material would be attractive for the high energy density capacitors. However, many earlier studies have shown that the α-phase of PVDF polymer will be gradually converted to the β-phase under high electric field (-500 MV/m).

Stretching PVDF films can also result in a α-to-β phase conversion. In the β-phrase, the energy density of the polymer is much lower due to the remanent polarization. In addition, the dielectric loss will increase due to the presence of the ferroelectric phase. In this sense, PVDF homopolymer is not an ideal dielectric material for the high energy capacitors.

Shown in Figures 3(a), 3(b) and 4 is the discharged energy density of PVDF versus the applied field E. Although an energy density of higher than 10 J/cm$^3$ can be reached, there are indications that the polarization switching process is also accompanied by the α-to-β phase conversion (relative large polarization hysteresis), which is not desirable and suitable for long term practical and reliable use in various electric and electronic systems.

On the other hand, by introducing small amount of another monomer into the PVDF polymer to expand the inter-chain space and break-up the dipole coherence in the polymer, the α-phase will be favored and stabilized even under mechanical stretching. After the application of very high electric field (>500 MV/m), the polymer can still return to the nonpolar phase, which is distinctively different from the PVDF homopolymer.

These considerations indicate that a few PVDF copolymers with bulky co-monomers such as chlorotrifluoroethylene (CTFE), chlorofluoroethylene (CFE), and hexafluoropropylene (HFP), and other similar monomers, have the potential to achieve high electric energy density.

Furthermore, by stretching the copolymers such as P(VDF-CTFE), P(VDF-HFP), and P(VDF-CFE), the polymer chain directions are aligned perpendicular to the applied field so that the polarization level can be increased and consequently the higher energy density may be obtained.

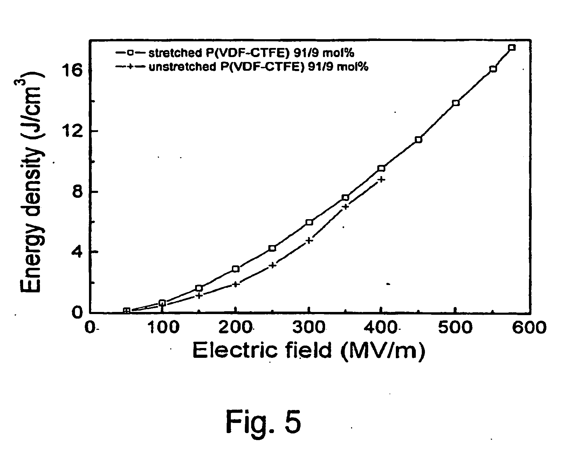

As shown in Figure 3(c) and Figure 5, for an uniaxially stretched P(VDF-CTFE) 85/15 wt% copolymer, the breakdown field can reach more than 570 MV/m and an energy density of 17 J/cm$^3$ can be obtained. The dielectric constant of this stretched copolymer at low electric field is about 15.

Shown in Figure 6 is the energy density data for a uniaxially stretched P(VDF-HFP) 90/10 wt% copolymer. The breakdown field is 525 M/m and an energy density of near 12 J/cm$^3$ is achieved. It is also observed that by either uniaxially or biaxially stretching these films, the electric breakdown field can be increased.

The data in Figures 5 and 6 also reveal that even at the highest field level, the polarization of these polymers is not saturated. In other words, the saturation polarization of these polymer is higher than 0.09 C/m$^2$. For example, in Figure 3, extrapolating the polarization to 0.1 C/m$^2$ and the field to 650 MV/m, an electric energy density of 24 J/cm$^3$ can be achieved. On the other hand, one can also increase the dielectric constant so that the saturation of 0.1 C/m$^2$ is reached at 500 MV/m or 550 MV/m, a lower field than 650 MV/m. Consequently, smaller energy density will be obtained (∼ 20 J/cm$^3$).

For the P(VDF-CTFE) copolymer and other similar ones (where the 2$^{nd}$ monomer is bulkier in size than VDF to expand the inter-chain space, and favoring the TGTG' conformation), one can introduce small amount of TrFE to raise the dielectric constant of these polymers, the mol% of TrFE can be in the amount 10 mol% or less. In addition, polymer blends of P(VDF-CTFE) or similar copolymer with the relaxor ferroelectric terpolymer of P(VDF-TrFE-CFE) (CFE: chlorofluoroethylene) and similar terpolymers can also lead to higher energy density.

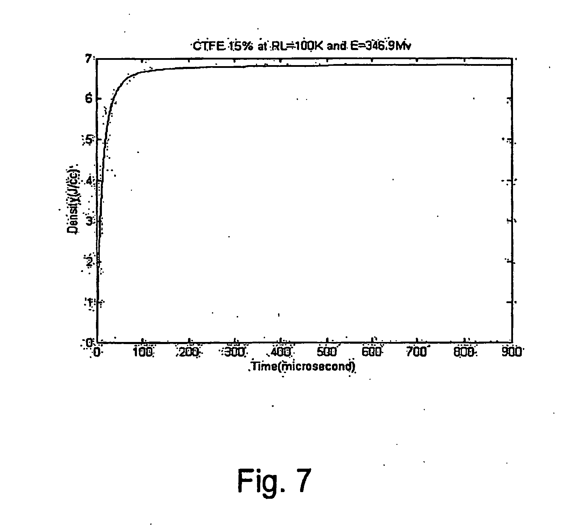

Figure 7 shows the discharge data of the P(VDF-CTFE) 85/15 wt% copolymers into a 100 kohm load. As can be seen, the stored electric energy can be released within very short time (less than 0.1 ms) which demonstrates that this class of high energy density capacitor can be operated to frequencies higher than 10 kHz.

A variety of PVDF based copolymers are commercially available. For example, P(VDF-CTFE) and P(VDF-HFP) can be purchased from Solvay, Arkema, and 3M. Other copolymers that are not commercially available can be synthesized using the suspension polymerization methods.

Thus, P(VDF-CFE), P(VDF-CDFE), P(VDF-TrFE-CTFE), P(VDF-TrFE-CFE), P(VDF-TrFE-HFP), P(VDF-TrFE-CDFE), P(VDF-TFE-CTFE), P(VDF-TFE-CFE), P(VDF-TFE-HFP), P(VDF-TFE-CDFE) can be synthesized using a suspension polymerization process using an oxygen-activated initiator.

The polymer blends can be fabricated by one of several methods, either by solution blending methods, melt method, extrusion method, or by any other convenient method which can blend the two polymers into a blend.

Thus, in the first step, each polymer used in the blend is synthesized or purchased from a commercial source.

In the solution method, the polymers with proper weight ratios are dissolved in a solvent such as methyl ethyl ketone or any suitable solvent that can dissolve the two polymers. The solution is then poured onto a glass plate and, after the evaporation of the solvent, a polymer film is formed. Alternatively, tape casting method can be used.

In the melt method, the two polymers in a proper wt% ratio are heated at near or above the melting temperatures of both polymers to obtain a uniform melt and thereafter, the melt is pressed under a stress to form a polymer film.

In the extrusion method, the two polymers in a proper wt% ratio are fed to the extruder to be processed to form a polymer film.

The present invention has been described with particular reference to the preferred embodiments. It should be understood that the foregoing descriptions and examples are only illustrative of the invention. Various alternatives and modifications thereof can be devised by those skilled in the art. Accordingly, the present invention is intended to embrace all such alternatives, modifications, and variations that fall within the scope of the appended claims.

**Claims**

1. A device for storing, and/or controlling, and/or manipulating
of charge and/or electric energy having a polymer film as a dielectric layer,
said polymer film as the dielectric layer being formed from:

   (ii) a polymer blend of poly(vinylidene fluoride) homopolymer with a copolymer selected from the group consisting of:

   poly (vinylidene- fluoride/ chlorotrifluoroethylene);
   poly (vinylidenefluoride/ chlorofluoroethylene);
   poly (vinylidene- fluoride/ hexafluoropropylene);
   and
   poly (vinylidene- fluoride/ chlorodifluoroethylene);
   or

   (iii) a polymer blend of a poly(vinylidene fluoride) homopolymer with a terpolymer selected from the group consisting of:

   poly(vinylidene fluoride/trifluoroethylene/ chlorotrlfluoroethylene);
   poly (vinylidene- fluoride/ trifluoroethylene/ chlorofluoroethylene);
   poly (vinylidene- fluoride/ trifluoroethylene/ hexafluorpropylene);
   poly (vinylidene- fluoride/ trifluoroethylene/ chlorodifluoroethylene);
   poly (vinylidene- fluoride/ tetrafluoroethylene/chlorotrifluoroethylene);
   poly (vinylidene- fluoride/ tetrafluoroethylene/chlorofluoroethylene);
   poly (vinylidene- fluoride/ tetraifluoroethylene/hexafluoropropylene;
   and
   poly (vinylidene- fluoride/ tetrafluoroethylene/chlorodifluoroethylene;
   or

   (Iv) a polymer blend of copolymer selected from the group consisting of:

   poly (vinylidene- fluoride/ chlorotrifluoroethylene), poly(vinylidene-fluoride/chlorofluoriethylene),
   poly (vinylidene- fluoride/ hexafluoropropylene),
   and
   poly (vinylidene- fluoride/ chlorodifluoroethylene);

   with a terpolymer selected from the group consisting of:
   poly (vinylidene- fluoride/ trifluoroethylene/ chlorotrifluoroethylene);
   poly (vinylidene- fluoride/ trifluoroethylene/ chlorofluoroethylene);
   poly (vinylidene- fluoride/ trifluoroethylene/ hexafluorpropylene);
   poly (vinylidene- fluoride/ trifluoroethylene/ chlorodifluoroethylene);
   poly (vinylidene- fluoride/ tetrafluoroethylene/chlorotrifluoroethylene);
   poly (vinylidene- fluoride/ tetrafluoroethylene/chlorofluoroethylene);
   poly (vinylidene- fluoride/ tetrafluoroethylene/hexafluoropropylene);
   and
   poly (vinylidene- fluoride/ tetrafluoroethylene/chlorodifluoroethylene).

2. The device of claim 1, wherein the mol% of chlorotrifluoroethylene, or chlorofluoroethylene, or hexafluoropropylene, or chlorodifluoroethylene in the copolymers and terpolymers is in the range up to 10 mol%.

3. The device of claim 1, wherein the mol% of trifluoroethylene or tetrafluoroethylene in the terpolymers is in the range up to 15 mol%.

4. The device of claim 1, wherein the mol% in the composition of the copolymer in the blend of poly(vinylidene fluoride) homopolymer with a copolymer or terpolymer in chlorotrifluoroethylene or chlorofluoroethylene or hexafluoropropylene or chlorodifluoroethylene is in the range up to 10 mol% and wherein the mol% in the terpolymer in trifluoroethylene or tetrafluoroethylene mol% is in the range from 20 mol% to 40 mol% and wherein the mol% in chlorotrifluoroethylene, or chlorofluoroethylene, or hexafluoropropylene, or chlorodifluoroethylene is in the range of 3 to 10 mol%.

5. The device of claim 1, wherein the films of the blends of poly(vinylidene fluoride) homopolymer or the blands of the copolymer and the terpolymer are uniaxially stretched to a drawing ratio from OX to 8X (zero times to 8 times) of the original length.

6. The device of claim 1, wherein the films of the blends of poly(vinylidene fluoride) homopolymer or the blands of the copolymer and the terpolymer are biaxially stretched to a stretching ratio from OX to 5X of the original length.

7. The device of claim 1, wherein the dielectric layer comprises poly(vinylidenefluoride/chlorotrifluoroethylene.

8. The device of claim 1, wherein the dielectric layer comprises poly(vinylidenefluoride/hexafluoropropylene.

9. The device of claim 1, wherein the charge or energy storage dielectric layer is polymer thin film capacitor.

10. The device of claim 9, wherein the dielectric layer comprises poly(vinylidenefluoride/chlorotrifluoroethylene.

11. The device of claim 9, wherein the dielectric layer comprises poly(vinylidenefluoride/hexafluoropropylene.

12. The device of claim 1, having a multilayer polymer dielectric layer.

13. The device of claim 1, wherein the device is a capacitor.

14. The device of claim 1, wherein the device is a Field Effect Transistor

**Patentansprüche**

1. Vorrichtung zur Speicherung und/oder Steuerung und/oder Manipulation von Ladung und/oder elektrischer Energie mit einem Polymerfilm als dielektrischer Schicht,
wobei der als dielektrische Schicht dienende Polymerfilm gebildet ist aus:

   (ii) einem Polymerblend aus einem Polyvinylidenfluorid-Homopolymer mit einem Copolymer, das aus der Gruppe ausgewählt ist, die aus

   Poly(vinylidenfluorid/chlortrifluorethylen); Poly(vinylidenfluorid/chlorfluorethylen); Poly(vinylidenfluorid/hexafluorpropylen); und Poly(vinylidenfluorid/chlordifluorethylen)
   besteht; oder

   (iii) einem Polymerblend aus einem Polyvinylidenfluorid-Homopolymer mit einem Terpolymer, das aus der Gruppe ausgewählt ist, die aus

   Poly (vinylidenfluorid/ trifluorethylen/ chlortrifluorethylen); Poly(vinylidenfluorid/trifluorethylen/chlorfluorethylen); Poly(vinylidenfluorid/trifluorethylen/hexafluorpropylen); Poly(vinylidenfluorid/trifluorethylen/chtordifluorethylen); Poly(vinylidenfluorid/tetrafluorethylen/chlortrifluorethylen); Poly(vinylidenfluorid/tetrafluorethylen/chlorfluorethylen); Poly (vinylidenfluorid/ tetrafluorethylen/ hexafluorpropylen); und Poly(vinylidenfluorid/tetrafluorethylen/chlordifluorethylen) besteht; oder

   (iv) einem Polymerblend aus einem Copolymer, das aus der Gruppe ausgewählt ist, die aus:

Poly(vinylidenfluorid/chlortrifluorethylen); Poly(vinylidenfluorid/chlorfluorethylen); Poly(vinylidenfluorid/hexafluorpropylen) und Poly(vinylidenfluorid/chlordifluorethylen)
besteht; mit einem Terpolymer, das aus der Gruppe ausgewählt ist, die aus:

   Poly (vinylidenfluorid/ trifluorethylen/ chlortrifluorethylen);
   Poly (vinylidenfluorid/ trifluorethylen/ chlorfluorethylen);
   Poly (vinylidenfluorid/ trifluorethylen/ hexafluorpropylen);
   Poly (vinylidenfluorid/ trifluorethylen/ chlordifluorethylen);
   Poly (vinylidenfluorid/ tetrafluorethylen/ chlortrifluorethylen);
   Poly (vinylidenfluorid/ tetrafluorethylen/ chlorfluorethylen);
   Poly (vinylidenfluorid/ tetrafluorethylen/ hexafluorpropylen); und
   Poly (vinylidenfluorid/ tetrafluorethylen/ chlordifluorethylen) besteht.

2. Vorrichtung gemäß Anspruch 1, wobei der molare prozentuale Anteil von Chlortrifluorethylen oder Chlorfluorethylen oder Hexafluorpropylen oder Chlordifluorethylen in den Copolymeren und Terpolymeren im Bereich von bis zu 10 Mol-% liegt.

3. Vorrichtung gemäß Anspruch 1, wobei der molare prozentuale Anteil von Trifluorethylen oder Tetrafluorethylen in den Terpolymeren im Bereich von bis zu 15 Mol-% liegt.

4. Vorrichtung gemäß Anspruch 1, wobei der molare prozentuale Anteil des Copolymers in dem Gemisch aus Polyvinylidenfluorid-Homopolymer mit einem Copolymer oder Terpolymer in Chlortrifluorethylen oder Chlorfluorethylen oder Hexafluorpropylen oder Chlordifluorethylen in der Zusammensetzung im Bereich von bis zu 10 Mol-% liegt und wobei der molare prozentuale Anteil des Terpolymers in Trifluorethylen oder Tetrafluorethylen im Bereich von 20 Mol-% bis 40 Mol-% liegt und wobei der molare prozentuale Anteil in Chlortrifluorethylen oder Chlorfluorethylen oder Hexafluorpropylen oder Chlordifluorethylen im Bereich von 3 Mol-% bis 10 Mol-% liegt.

5. Vorrichtung gemäß Anspruch 1, wobei die Filme aus den Gemischen von Polyvinylidenfluorid-Homopolymer oder den Gemischen des Copolymers und des Terpolymers bis zu einem Streckverhältnis von 0x bis 8x (dem Nullfachen bis Achtfachen) der ursprünglichen Länge uniaxial gestreckt sind.

**6.** Vorrichtung gemäß Anspruch 1, wobei die Filme aus den Gemischen von Polyvinylidenfluorid-Homopolymer oder den Gemischen des Copolymers und des Terpolymers bis zu einem Streckverhältnis von 0x bis 5x der ursprünglichen Länge biaxial gestreckt sind.

**7.** Vorrichtung gemäß Anspruch 1, wobei die dielektrische Schicht Poly-(vinylidenfluorid/chlortrifluorethylen) umfasst.

**8.** Vorrichtung gemäß Anspruch 1, wobei die dielektrische Schicht Poly-(vinylidenfluorid/hexafluorpropylen) umfasst.

**9.** Vorrichtung gemäß Anspruch 1, wobei die ladungs- oder energiespeichernde dielektrische Schicht ein Polymerdünnschichtkondensator ist.

**10.** Vorrichtung gemäß Anspruch 9, wobei die dielektrische Schicht Poly-(vinylidenfluorid/chlortrifluorethylen) umfasst.

**11.** Vorrichtung gemäß Anspruch 9, wobei die dielektrische Schicht Poly-(vinylidenfluorid/hexafluorpropylen) umfasst.

**12.** Vorrichtung gemäß Anspruch 1, die eine mehrschichtige dielektrische Polymerschicht aufweist.

**13.** Vorrichtung gemäß Anspruch 1, wobei die Vorrichtung ein Kondensator ist.

**14.** Vorrichtung gemäß Anspruch 1, wobei die Vorrichtung ein Feldeffekttransistor ist.

**Revendications**

**1.** Dispositif permettant de stocker, et/ou de commander, et/ou de manipuler une charge et/ou une énergie électrique, comportant un film polymère en tant que couche diélectrique,
ledit film polymère en tant que couche diélectrique étant forme :

(ii) d'un mélange de polymères d'homopolymère de poly(fluorure de vinylidène) avec un copolymère choisi dans le groupe consistant en :

le poly(fluorure de vinylidène/chlorotrifluoroéthylène) ; le poly(fluorure de vinylidène/chlorofluoroéthylène) ; le poly(fluorure de vinylidène/hexafluoropropylène) ; et
le poly(fluorure de vinylidène/chlorodifluoroéthylène) ; ou

(iii) d'un mélange de polymères d'homopolymère de poly(fluorure de vinylidène) avec un terpolymère choisi dans le groupe consistant en :

le poly(fluorure de vinylidène/trifluoroéthylène/ chlorotrifluoroéthylène)
le poly(fluorure de vinylidène/trifluoroéthylène/ chlorofluoroéthylène) ;
le poly(fluorure de vinylidène/trifluoroéthylène/ hexafluoropropylène) ;
le poly(fluorure de vinylidène/trifluoroéthylène/ chlorodifluoroéthylène) ;
le poly(fluorure de vinylidène/tétrafluoroéthylène/ chlorotrifluoroéthylène);
le poly(fluorure de vinylidène/tétrafluoroéthylène/ chlorofluoroéthylène) ;
le poly(fluorure de vinylidène/tétrafluoroéthylène/ hexafluoropropylène) ;
et
le poly(fluorure de vinylidène/tétrafluoroéthylène/ chlorodifluoroéthylène) ;
ou

(iv) d'un mélange de polymères de copolymère choisi dans le groupe consistant en :

le poly(fluorure de vinylidène/chlorotrifluoroéthylène) ;
le poly(fluorure de vinylidène/chlorofluoroéthylène) ;
le poly(fluorure de vinylidène/hexafluoropropylène) ;
et
le poly(fluorure de vinylidène/chlorodifluoroéthylène) ;
avec un terpolymère choisi dans le groupe consistant en :
le poly(fluorure de vinylidène/trifluoroéthylène/ chlorotrifluoroéthylène)
le poly(fluorure de vinylidène/trifluoroéthylène/ chlorofluoroéthylène) ;
le poly(fluorure de vinylidène/trifluoroéthylène/ hexafluoropropylène) ;
le poly(fluorure de vinylidène/trifluoroéthylène/ chlorodifluoroéthylène) ;
le poly(fluorure de vinylidène/tétrafluoroéthylène/ chlorotrifluoroéthylène) ;
le poly(fluorure de vinylidène/tétrafluoroéthylène/ chlorofluoroéthylène) ;
le poly(fluorure de vinylidène/tétrafluoroéthylène/ hexafluoropropylène) ;
et
le poly(fluorure de vinylidène/tétrafluoroéthylène/ chlorodifluoroéthylène).

**2.** Dispositif selon la revendication 1, dans lequel le % en mol de chlorotrifluoroéthylène, ou de chlorofluoroéthylène, ou d'hexafluoropropylène, ou de chlorodifluoroéthylène dans les copolymères et terpolymères est dans la plage allant jusqu'à 10 % en mol.

3. Dispositif selon la revendication 1, dans lequel le % en mol de trifluoroéthylène ou de tétrafluoroéthylène dans les terpolymères est dans la plage allant jusqu'à 15 % en mol.

4. Dispositif selon la revendication 1, dans lequel le % en mol dans la composition du copolymère dans le mélange d'homopolymère de poly(fluorure de vinylidène) avec un copolymère ou terpolymère dans le chlorotrifluoroéthylène ou le chlorofluoroéthylène ou l'hexafluoropropylène ou le chlorodifluoroéthylène est dans la plage allant jusqu'à 10 % en mol et dans lequel le % en mol dans le terpolymère dans le % en mol de trifluoroéthylène ou tétrafluoroéthylène est dans la plage de 20 % en mol à 40 % en mol et dans lequel le % en mol dans le chlorotrifluoroéthylène, ou le chlorodifluoroéthylène, ou l'hexafluoropropylène est dans la plage de 3 à 10 % en mol.

5. Dispositif selon la revendication 1, dans lequel les films des mélanges d'homopolymère de poly(fluorure de vinylidène) ou des mélanges du copolymère et du terpolymère sont uniaxialement étirés à un rapport d'étirage de 0X à 8X (zéro fois à 8 fois) la longueur d'origine.

6. Dispositif selon la revendication 1, dans lequel les films des mélanges d'homopolymère de poly(fluorure de vinylidène) ou des mélanges du copolymère et du terpolymère sont biaxialement étirés à un rapport d'étirage de 0X à 5X la longueur d'origine.

7. Dispositif selon la revendication 1, dans lequel la couche diélectrique comprend du poly(fluorure de vinylidène)/chlorotrifluoroéthylène.

8. Dispositif selon la revendication 1, dans lequel la couche diélectrique comprend du poly(fluorure de vinylidène)/hexafluoropropylène.

9. Dispositif selon la revendication 1, dans lequel la couche diélectrique de stockage de charge ou d'énergie est un condensateur à couches minces polymères.

10. Dispositif selon la revendication 9, dans lequel la couche diélectrique comprend du poly(fluorure de vinylidène)/chlorotrifluoroéthylène.

11. Dispositif selon la revendication 9, dans lequel la couche diélectrique comprend du poly(fluorure de vinylidène)/hexafluoropropylène.

12. Dispositif selon la revendication 1, comportant une couche diélectrique polymère multicouche.

13. Dispositif selon la revendication 1, dans lequel le dispositif est un condensateur.

14. Dispositif selon la revendication 1, dans lequel le dispositif est un transistor à effet de champ.

Fig. 1

Fig. 2

## Fig. 3a

## Fig. 3b

Fig. 3c

Fig. 4

Fig. 5

## Fig. 6a

## Fig. 6b

Fig. 7

# EP 1 966 810 B1

## REFERENCES CITED IN THE DESCRIPTION

### Patent documents cited in the description

- EP 0298811 A1